(19) Europäisches Patentamt / European Patent Office / Office européen des brevets

(11) **EP 2 034 164 B1**

(12) **FASCICULE DE BREVET EUROPEEN**

(45) Date de publication et mention
de la délivrance du brevet:
**11.07.2012 Bulletin 2012/28**

(51) Int Cl.:
*F02D 41/24* *(2006.01)*    *F02D 41/40* *(2006.01)*

(21) Numéro de dépôt: **08290726.2**

(22) Date de dépôt: **25.07.2008**

(54) **Méthode d'injection de carburant dans un moteur à combustion interne**

Einspritzmethode von Kraftstoff in einen Verbrennungsmotor

Method of injecting fuel in an internal combustion engine

(84) Etats contractants désignés:
**GB IT**

(30) Priorité: **04.09.2007 FR 0706200**

(43) Date de publication de la demande:
**11.03.2009 Bulletin 2009/11**

(73) Titulaire: **IFP Energies nouvelles
92852 Rueil-Malmaison Cedex (FR)**

(72) Inventeur: **Sciarretta, Antonio
92500 Rueil-Malmaison (FR)**

(56) Documents cités:
EP-A- 1 344 923    EP-A2- 1 617 065
US-A- 5 609 140    US-B1- 7 000 600

• CARLUCCI P ET AL: "STUDY ON THE MODULATION OF THE FUEL RATE OF A COMMON RAIL INJECTOR", SAE TECHNICAL PAPER SERIES, SOCIETY OF AUTOMOTIVE ENGINEERS, WARRENDALE, PA, US, 1 January 2003 (2003-01-01), page 8, XP001155469, ISSN: 0148-7191

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne le domaine du contrôle d'un moteur à combustion interne. Plus particulièrement, l'invention concerne une méthode pour améliorer le processus d'injections multiples des moteurs à combustion interne.

L'injection directe haute pression, via une rampe commune appelée « *common-rail* », a l'avantage de réduire fortement le taux de pollution des moteurs diesels. A partir du réservoir, le système se compose classiquement d'un réchauffeur de carburant, d'un filtre, d'une pompe d'alimentation, d'une valve de coupure, de la pompe haute pression, de la rampe commune comprenant un capteur de pression et une valve de régulation de pression, des canalisations vers les injecteurs, des injecteurs électromagnétiques et d'un refroidisseur de carburant vers le retour au réservoir.

La rampe commune aux injecteurs se compose d'un tube de forte épaisseur pouvant résister à de très hautes pressions, portant à ses extrémités un capteur de pression et un régulateur de pression. Ce dernier reçoit et stocke le carburant haute pression en provenance de la pompe, il alimente en permanence les injecteurs toujours sous pression. Cette pression est régulée par le régulateur qui est commandé par le boîtier électronique selon une cartographie en mémoire. Une cartographie est un ensemble de données mises en mémoire dans le calculateur. Une cartographie sert de référence au calculateur pour commander de façon optimale son logiciel appelé régulateur.

L'utilisation d'une rampe commune permet de maîtriser le temps d'injection. Le calculateur, en fonction des multiples informations envoyées par les différents capteurs, reçoit des signaux d'entrée et gère des sorties en fonction de critères de fonctionnement du moteur. Pour adapter la quantité de carburant, le calculateur agit soit sur la pression de carburant dans la rampe (valve du régulateur de pression et débit fourni par la pompe), soit sur la durée d'activation des électrovannes des injecteurs, en synchronisant bien sur ces actions. La quantité injectée dépend de la commande des électrovannes, de la vitesse d'ouverture et de la fermeture de l'aiguille de l'injecteur, de la pression de carburant dans le rail, de la quantité passée par l'injecteur et de la levée de l'aiguille.

Le succès technique et commercial des systèmes d'injection de carburant avec une rampe commune, est l'une des raisons les plus importantes de la croissance des moteurs diesel dans le marché automobile. Le facteur principal de ce succès est la flexibilité que ce système à rampe commune fournit en termes de paramètres d'injection comme le temps d'injection et la pression du carburant.

Les systèmes d'injection modernes à rampe commune, permettent une combustion avec injections multiples. Les injections pilotes sont utiles pour réduire le bruit de combustion, particulièrement pendant l'opération à froid, et les émissions polluantes, particulièrement ceux de NOx et particules. A charge moyenne, le meilleur compromis est attendu avec une injection principale séparée en deux injections différentes.

D'autre part, les injections tardives peuvent diminuer les émissions de NOx et favoriser la régénération des filtres de particules.

Pour optimiser l'injection de carburant, un contrôleur, c'est-à-dire un logiciel du calculateur, reçoit des informations concernant le fonctionnement du moteur et les performances attendues, et en déduit la masse de carburant à injecter, de façon à optimiser le fonctionnement du moteur.

**État de la technique**

Pour ce faire, le contrôleur se base sur un ensemble de cartographies moteur, comme illustré dans les documents EP-A1-1 344 923, US-A-5 609 140, et US -B1-7 000 600. Cependant, ces cartographies correspondent à des points de fonctionnement statiques. De ce fait, en fonctionnement, les valeurs de réglage contenues dans les cartographies d'injections peuvent être caduques. De plus, le nombre de données nécessaires pour renseigner des cartographies, même bidimensionnelles, est très important.

De plus, en raison des manoeuvres rapides d'ouverture et de fermeture des injecteurs, des ondes de pression sont produites dans les tubes de raccordement entre chaque injecteur et la rampe commune (common-rail). Ces oscillations sont assez fortes pour influencer la quantité du carburant injectée dans les injections successives d'un même injecteur.

En d'autres termes, alors que l'on souhaite injecter une masse M de carburant via un injecteur, une masse M', différente de M, sera effectivement injectée. Or la masse M est déterminée par un contrôleur, logiciel du calculateur, de façon à optimiser le fonctionnement du moteur.

Ainsi, l'effet de ces oscillations est un fonctionnement anormal du moteur, pouvant conduire à une augmentation de la consommation, de la pollution, du bruit, ...

Dans une approche traditionnelle, décrite par exemple dans Automotive Handbook, Robert Bosch GmbH, 2006, les variations des masses de carburant injectées dans les injections suivantes à la première, sont mesurées en fonction des paramètres d'injection, qui comprennent, au moins, les durées des injections, le temps de séparation entre les injections successives, la pression du rail. Les résultats des essais expérimentaux sont stockés dans des tables pour être accessibles pendant le fonctionnement du moteur. Ces tables donnent a priori la correction à apporter à la masse commandée en fonction des paramètres d'injection actuels.

D'une part, cette approche traditionnelle est uniquement basée sur des essais expérimentaux. Ces essais sont typiquement conduits sur un banc spécialisé pour les systèmes d'injection, avant d'être utilisés sur un moteur. Pendant l'utilisation sur un moteur, cette approche ne permet pas la correction en ligne des données stockées, pour prendre en compte les inévitables dérives des injecteurs, les variations entre l'environnement du banc injecteurs et celui variable du moteur, etc. Le seul retour du système est dû à la mesure de la pression de la rampe «(*rail*», laquelle n'est pas directement représentative de la masse injectée, et donc, ne peut pas servir de base à d'éventuelles corrections à apporter. Ceci est d'autant plus important que les injections deviennent toujours plus nombreuses, et donc chacune plus faibles. L'approche traditionnelle rencontre notamment des difficultés en caractérisant le procédé dans le cas de très faibles injections, qui sont critiques à caractériser, comme des événements isolés (stabilité de combustion).

D'autre part, cette approche traditionnelle n'est pas très pratique, puisque les tables de fonctionnement dans les systèmes de contrôle avancés des moteurs sont limitées à deux où trois entrées. Par contre, les paramètres d'injection qui influencent les masses injectées sont multiples : au total, on peut avoir au moins 2N paramètres d'influence, si N est le nombre d'injections. En pratique, l'influence de certains de ces paramètres doit être négligée, ce qui mène à des tables bidimensionnelles, ou décomposée en tables partielles, ce qui ne garantit pas la correcte reproduction des influences globales.

Une approche alternative implique l'utilisation d'un capteur de la pression dans chaque tube d'injection. Cette pression peut donner des informations sur l'interférence entre deux injections successives. En conséquence, la correction des masses à injecter est possible avec beaucoup de précision.

Néanmoins, cette solution pour moteurs multicylindres demande l'usage de plusieurs capteurs, par exemple à effet magnéto-elastique. Actuellement ces capteurs ne sont pas utilisés dans les moteurs et donc, même si leur coût est en baisse, leur introduction augmente la complexité du système. En plus, un contrôleur basé sur ces mesures doit être nécessairement haute fréquence, ce qui n'est pas toujours compatible avec la puissance des unités de contrôle embarquées dans le calculateur.

Ainsi, l'objet de l'invention, est une méthode alternative pour améliorer le processus d'injections (simples ou multiples) des moteurs à combustion interne, permettant de s'affranchir de l'utilisation d'une cartographie moteur.

L'invention est basée sur un modèle physique décrivant le procédé d'injection, dans lequel on définit une dépendance explicite entre les temps d'injection et la masse injectée.

**La méthode selon l'invention**

La méthode selon l'invention permet d'injecter une masse m de carburant via au moins un injecteur d'une rampe commune équipant un moteur à combustion interne. La méthode comporte les étapes suivantes :

a.- on définit, en appliquant le principe de conservation de la masse et le théorème de Bernoulli, un modèle physique continu *f* décrivant le procédé d'injection en terme de débit de masse à travers l'injecteur, dans lequel on définit une dépendance entre temps d'injection et masse injectée, en prenant en compte la pression dans ladite rampe commune ledit modèle *f* étant de la forme :

$$M \approx k(p_r)\left\{(t-t_0) + \frac{1}{D}\left[e^{-D(t-t_0)} - 1\right]\right\}$$

avec :

$k$ : une fonction de $p_r$ et de paramètres à calibrer ;
$t_0$ : instant avant lequel aucune masse de carburant n'est injectée ;
$D$ : paramètres du modèle à calibrer ;

b.- on mesure une pression $p_r$ dans ladite rampe commune ;

c.- on détermine un temps $t$ d'injection de carburant nécessaire pour injecter la masse $m$ de carburant, à l'aide dudit modèle physique et de ladite pression $p_r$ ; et

d.- on injecte du carburant via l'injecteur pendant le temps $t$.

Dans le cadre d'injections successives, on adapte le temps $t$ de l'injection de la masse $m$, de façon à compenser des effets d'une première injection précédant l'injection de la masse *m*, en remplaçant, à l'étape c), la masse *m* par une masse *mc* de carburant tenant compte des effets de la première injection. Cette masse *mc* est déterminée de la façon suivante :

- on définit un second modèle continu physique *g*, décrivant le procédé d'une injection suivant une première injection en terme de débit de masse à travers l'injecteur, dans lequel on définit une dépendance entre temps d'injection et masse injectée, en prenant en compte la pression dans la rampe commune, un temps séparant les injections, et un temps d'injection de la première injection.

- on détermine la masse *mc* à injecter, en combinant le modèle physique *f* et le second modèle physique g.

Selon l'invention, le second modèle *g*, peut correspondre au modèle *f*, dans lequel la pression dans la mesure de pression dans la rampe est remplacée par une estimation de la pression dans la rampe avant le début de l'injection.

Le modèle *f* peut être calibré à partir de mesures de consommation de carburant issues d'essais sur banc moteur avec injections simples, et le modèle *g* peut être calibré à partir de mesures de consommation de carburant issues d'essais sur banc moteur avec injections multiples. De préférence, le banc moteur est un banc dédié au système d'injection isolé du reste du moteur.

Enfin, selon l'invention, on peut adapter en ligne les modèles, à partir de mesures réalisées pendant un fonctionnement sur véhicule du moteur. Dans ce cas, on peut détecter la première injection à l'aide d'un algorithme basé sur une méthode de signatures.

D'autres caractéristiques et avantages de la méthode selon l'invention, apparaîtront à la lecture de la description ci-après d'exemples non limitatifs de réalisations, en se référant aux figures annexées et décrites ci-après.

**Présentation succincte des figures**

- La figure 1 est un schéma fonctionnel du contrôleur, pour un système à deux injections.

- La figure 2 illustre l'évolution de la pression *p* dans le tube en fonction du temps t.

- La figure 3 montre l'évolution d'une masse injectée $M_1$ (mg) en fonction de la durée d'injection $t_1$ ($\mu$s) pour six niveaux de pression de la rampe $p_{r(1)}$ à $p_{r(6)}$.

- Les figures 4A à 4D représentent la masse corrigée (mg) en fonction du temps de séparation ($\mu$s), pour différentes conditions d'essai.

- La figure 5 montre une structure d'adaptation, qui utilise des mesures du système pour mettre à jour en ligne les paramètres du modèle.

**Description détaillée de la méthode**

Selon l'invention, on équipe le calculateur du moteur d'un contrôleur, comportant au moins un compensateur. Ce compensateur permet de déterminer les temps d'injection nécessaires pour obtenir les masses de carburant souhaitées.

**Cas d'injection simple**

Selon un premier mode de réalisation, on optimise l'injection dans le cadre d'injection simple, c'est-à-dire d'injection non successive au niveau d'un injecteur. Cette injection correspond au cas classique où chaque injecteur injecte une seule fois par cycle. Il peut également s'agir d'un cas où les injections multiples sont possibles, mais sur certains points de fonctionnement du moteur on préfère avoir une seule injection, pour ne pas augmenter la consommation à haute vitesse moteur, par exemple.

Dans ce cas, la méthode comporte les étapes suivantes pour un injecteur donné :

1. détermination de la masse de carburant à injecter $\overline{M}_1$ par l'injecteur ;

2. détermination du temps $t_1$ d'injection du carburant par l'injecteur, pour injecter effectivement la masse $\overline{M}_1$ ; (étape

**4**

*SI-COM*)

3. injection du carburant par l'injecteur pendant le temps $t_1$.

1. Détermination de la masse de carburant à injecter

Une masse de carburant à injecter $\overline{M}_1$ est déterminée par un contrôleur de façon à optimiser le fonctionnement du moteur. Cette masse de carburant $\overline{M}_1$ est déterminée en fonction des conditions de fonctionnement du moteur et des performances attendues.

2. Détermination du temps d'injection $t_1$ pour obtenir la masse de carburant souhaitée

La valeur cherchée $t_1$ est la durée d'injection telle que le système physique réalise la masse exigée $\overline{M}_1$, Pour ce faire, au lieu d'utiliser une cartographie statique, on construit un modèle physique décrivant le procédé d'injection en reliant le temps d'injection et la masse injectée.

On procède comme suit :

- on définit un modèle physique décrivant le procédé d'injection et fournissant une relation (fonctionnelle) explicite entre la masse injectée et le temps d'injection ;

- on calibre le modèle ;

- on applique le modèle.

***Définition d'un modèle physiques***

Le modèle décrivant le procédé d'injection est défini de façon à estimer une masse injectée M en fonction d'une durée d'injection $D_{inj}$ et de la pression dans la rampe $p_r$ :

$$M = f(p_r, D_{inj})$$

La fonction continue $f$ (le modèle) doit être calibrée. De façon explicite, le modèle est construit de façon à décrire le procédé d'injection en terme de débit de masse à travers l'injecteur. Pour ce faire, on écrit que la masse injectée correspond à l'intégrale du débit de masse à travers l'injecteur, puis on applique le principe de conservation de la masse et le théorème de Bernoulli. Le théorème de Bernoulli exprime le bilan hydraulique simplifié d'un fluide dans une conduite. Ce théorème pose les bases de l'hydrodynamique et, d'une façon plus générale, de la mécanique des fluides.

Plus un modèle est précis, plus il est complexe. Un modèle trop complexe ne serait pas utilisable à bord d'un véhicule. Des hypothèses simplificatrices sont donc nécessaires. On peut admettre les hypothèses suivantes :

(i) on considère la pression d'injection constante pendant la durée d'injection et égale à la pression dans le rail,

(ii) on représente la dynamique de l'aiguille avec une loi dynamique du premier ordre, et

(iii) on linéarise l'influence de la pression sur le coefficient de décharge et sur la vitesse d'injection du carburant par rapport à la racine carré de la pression elle-même.

On obtient alors le modèle suivant permettant de décrire le procédé d'injection :

$$M \approx k(p_r)\left\{(t - t_0) + \frac{1}{D}\left[e^{-D(t-t_0)} - 1\right]\right\},$$

$$(1)$$

Avec :

$p_r$ : pression dans la rampe

$$k(x) \approx c_1 \sqrt{x} + c_2 \, ,$$ avec $c_1$ et $c_2$ des paramètres additionnels du modèle

$t_0$ : instant au dessous duquel il n'y a pas de masse de carburant injectée

$D$ : un paramètre additionnel à calibrer

Les paramètres du modèle à calibrer sont donc $c_1$, $c_2$, $t_0$, et D.

### Calibration des paramètres

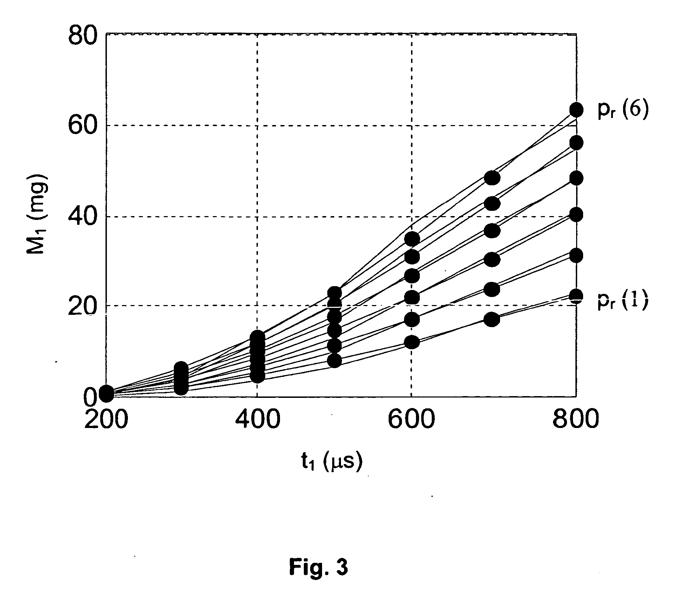

Les paramètres du modèle utilisés dans le compensateur sont calibrés à partir des mesures de la consommation du carburant pendant des essais moteurs avec injections simples. On peut réaliser ces essais sur un banc moteur classique, en modifiant les paramètres d'un moteur monté sur un banc d'essai. De préférence, on utilise un banc dédié au système d'injection. Dans cette configuration, le système est isolé du reste du moteur, puis monté sur un banc. Cette configuration a l'avantage de pouvoir faire un plus grand nombre de paramètres du système d'injection, et dans des gammes qui ne seraient pas forcément acceptables sur un moteur. On réalise ainsi plusieurs essais à différentes pressions de la rampe, $p_r$. Un exemple d'une telle calibration est montré sur la figure 3. Cette figure montre une masse injectée $M_1$ (mg) en fonction de la durée d'injection $t_1$ (µs) pour six niveaux de pression de la rampe $p_{r(1)}$ à $p_{r(6)}$. Les lignes continues représentent des données expérimentales, tandis que les points représentent des sorties du modèle décrivant le procédé d'injection. L'erreur moyenne est au-dessous de 5%. Les paramètres du modèle calibrés sont $c_1$ = 0.010, $c_2$ = -0.183, $t_0$ = 108 µs, et D = 0.0015.

### Application des modèles paramétrés

Le modèle physique, décrivant le procédé d'injection et ainsi paramétré, permet au compensateur de déterminer le temps d'injection $t_1$ nécessaire pour obtenir la masse $\overline{M}_1$ de carburant.

$$\overline{M}_1 = f(p_r, t_1)$$

3. Injection du carburant via l'injecteur pendant le temps $t_1$

On injecte du carburant pendant un temps $t_1$ via l'injecteur.

### Cas d'injections successives

Selon un second mode de réalisation, on optimise l'injection dans le cadre d'injections successives. En raison des manoeuvres rapides d'ouverture et de fermeture des injecteurs, des ondes de pression sont produites dans les tubes de raccordement entre chaque injecteur et la rampe commune. Ces oscillations sont assez fortes pour influencer la quantité du carburant injectée dans les injections successives d'un même injecteur.

En d'autres termes, alors que l'on souhaite injecter une masse M de carburant via un injecteur, une masse M', différente de M, sera effectivement injectée. Or la masse M est déterminée par un contrôleur, logiciel du calculateur, de façon à optimiser le fonctionnement du moteur.

Ainsi, l'effet de ces oscillations est un fonctionnement anormal du moteur, pouvant conduire à une augmentation de la consommation, de la pollution, du bruit, ...

On équipe encore le calculateur du moteur d'un contrôleur, comportant au moins un compensateur. Ce compensateur permet de déterminer le temps d'injection nécessaire pour obtenir la masse M de carburant, et non la masse M'. Idéalement, le contrôleur dispose d'un compensateur pour chaque injecteur de la rampe commune (« common rail »).

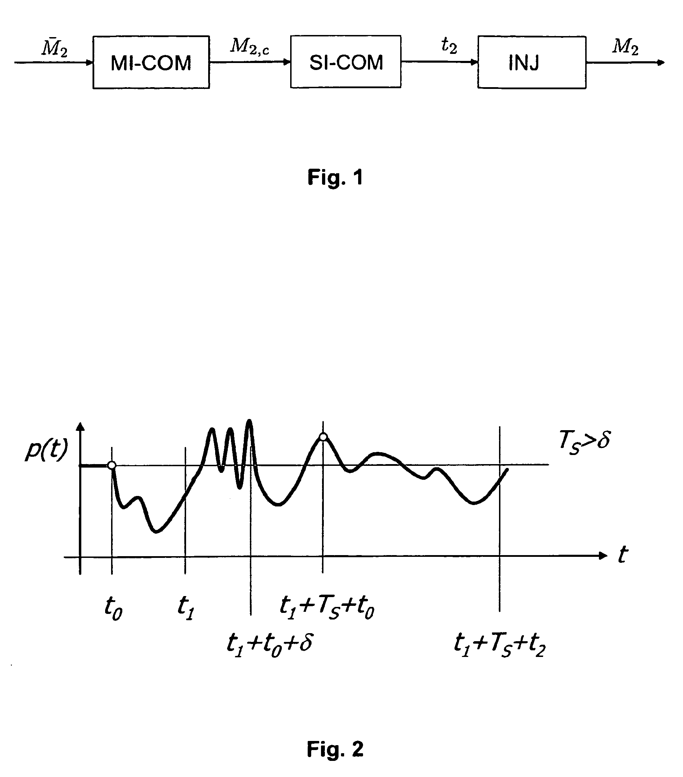

Après avoir réalisé une première injection, le processus d'optimisation d'injections selon l'invention comporte les étapes suivantes pour un injecteur donné (figure 1) :

1. détermination de la masse de carburant à injecter $\overline{M}_2$ par l'injecteur, pour la deuxième injection ;

2. correction de la masse à injecter en fonction de l'injection précédente. Cette masse corrigée est notée $M_{2,c}$ ;

(étape *MI-COM*)

3. détermination du temps $t_2$ d'injection du carburant par l'injecteur, pour injecter la masse corrigée $M_{2,c}$ ; (étape *SI-COM*)

4. injection (*INJ*) du carburant par l'injecteur pendant le temps $t_2$.

Ces étapes sont ensuite répétées pour chaque nouvelle injection.

### 1. Détermination de la masse de carburant à injecter

Une masse de carburant à injecter $\overline{M}_2$ est déterminée par un contrôleur de façon à optimiser le fonctionnement du moteur. Cette masse de carburant $\overline{M}_2$ est déterminée en fonction des conditions de fonctionnement du moteur et des performances attendues.

### 2. Détermination de la masse de carburant corrigée

La masse de carburant à injecter doit être corrigée à cause des effets d'oscillations d'une injection précédente. S'il s'agit de la première injection, cette étape n'est pas réalisée.
Cette étape (*MI-COM*) compense la dynamique de l'injecteur dans le cas des injections multiples et fournit une valeur de la masse corrigée $M_{2,c}$.
La méthode de compensation de la dynamique de l'injecteur selon l'invention comporte les étapes suivantes pour un injecteur donné :

- définition de modèles physiques décrivant le procédé d'injection et fournissant une relation (fonctionnelle) explicite entre la masse injectée et les temps d'injection des injections successives, avec la pression de la rampe comme paramètre principal et les conditions de l'environnement (par exemple, les températures) comme paramètres additionnels ;

- calibration des modèles ;

- application des modèles.

La figure 2 illustre l'évolution de la pression $p$ dans le tube en fonction du temps t. L'instant $t_0$ est un instant au-dessous duquel il n'y a pas de masse de carburant injectée. On observe des vagues de pression dans le tube après la première fermeture de l'injecteur (commandée à l'instant $t_1$ et réalisée à l'instant $t_0+t_1$) et après une phase de stabilisation pendant une durée $\delta$. L'ouverture de l'injecteur, pour la deuxième injection, se produit après un délai $T_S$. La durée de la première injection est donc $t_1$, et la durée de la seconde est donc $t_2$.
Les modèles décrivant le procédé d'injection et permettant d'estimer la masse corrigée $M_{2,c}$ sont définis en fonction de la valeur du temps de séparation $T_S$, c'est-à-dire le temps entre deux injections, et la durée $\delta$ de la phase de stabilisation.

- Pour de grands temps de séparation ($T_s > \delta$), la dépendance entre la durée de la deuxième injection $t_2$ et la masse injectée au cours de la deuxième injection $M_2$ est donnée par l'équation :

$M_2 = g(p_2, t_2, T_S)$, et par exemple de façon explicite :

$$M_2 = c_4 + k(p_2)\left\{(t_2 - t_0) + \frac{1}{D}\left[e^{-D(t_2 - t_0)} - 1\right]\right\}, \tag{3}$$

dans laquelle $c_4$ et $D$ sont des paramètres du modèle, et $p_2$ est la valeur de la pression qui résulte des oscillations dans le tube de raccordement entre l'injecteur et le rail (Figure 3).

Cette équation provient des équations de la dynamique des fluides, équations qui régissent le système d'injection suite à une première injection. Entre les deux injections, dans un premier temps, la pression manifeste un comportement instable généré par l'interférence des dynamiques de l'aiguille (dynamiques de l'injecteur) et du circuit. Successivement, la pression oscille de façon stable et d'une façon amortie. La deuxième injection commence quand la pression atteint une valeur $p_2$, différente de celle dans la rampe. On obtient ainsi l'équation (4), en faisant en plus les hypothèses suivantes :

(i) on considère constante la durée d'instabilité $\delta$ ;

(ii) on considère constante la fréquence et le coefficient d'amortissement de l'oscillation stable amortie ;

(iii) on considère l'amplitude de l'oscillation comme proportionnelle à la pression de la rampe ;

(iv) on considère que l'effet *de* $p_2$ sur la deuxième injection est principalement celui de remplacer la pression de la rampe dans l'équation (1).

Ainsi, la masse corrigée s'écrit sous la forme suivante (en écrivant $M_{2,c}$ sous la forme de (1) et $\overline{M}_2$ sous la forme de (3)) :

$$M_{2,c} = \frac{k(p_r)}{k(p_2)}\left(\overline{M}_2 - c_4\right) \qquad (5)$$

Avec :

$p_r$ : pression de la rampe

$k(x) \approx c_1\sqrt{x} + c_2$, avec $c_1$ et $c_2$ des paramètres additionnels du modèle

$c_4$ : un paramètre du modèle

$p_2$ : valeur de la pression dans le tube de raccordement, entre l'injecteur et la rampe, au début de la deuxième injection. Cette pression joue le rôle de $p_r$ pour la première injection, elle est différente de $p_r$.

Le compensateur calcule $p_2$ de la façon suivante :

$$p_2 = p_r - c_3 e^{-\zeta\omega_n(T_S - \delta)}\sin(\omega(T_S - \delta)), \qquad (4)$$

dans laquelle $c_3$, $\zeta$, $\omega_n$ sont des paramètres additionnels du modèle, et $\varpi = \varpi_n \cdot \sqrt{1 - \zeta^2}$

Ainsi, les paramètres de ce modèle sont : $c_1$, $c_2$, $c_3$, $c_4$, $\zeta$ $\omega_n$, et $\delta$.

-   Pour de faibles temps de séparation ($T_S < \delta$), la dépendance entre la durée de la deuxième injection $t_2$ et la masse injectée au cours de la deuxième injection $M_2$ est donnée par l'équation :

$M_2 = h(p_r, t_2, T_S)$, et par exemple de façon explicite :

$$M_2 = k(p_r)\left\{(t_2 - t_0) + \frac{1}{D'(T_S, t_1)}\left[e^{-D(t_2 - t_0)} - 1\right]\right\}, \qquad (6)$$

dans laquelle la fonction D'($T_S$, $t_1$) est donnée par

$$\frac{1}{D'} = \frac{1}{D}\left\{1 - e^{-DT_S}\left(1 - c_5 e^{-D(t_1 - t_0)}\right)\right\},$$

(7)

et $c_5$ étant un paramètre additionnel du modèle.

Cette équation est obtenue en appliquant les mêmes hypothèses que celles menant aux équations (3) et (5), pour deux injections proches.

Ainsi, la masse corrigée s'écrit sous la forme suivante :

$$M_{2,c} = k(p_r)\left\{\frac{r_1}{D}\bar{\xi}^2 + \left(1 + \frac{r_2}{D}\right)\bar{\xi} + r_3\right\}.$$

(10)

Avec :

$\xi$ tel que :

$$\bar{M}_2 = k(p_r)\left\{\frac{r_1}{D'(T_S, t_1)}\bar{\xi}^2 + \left(1 + \frac{r_2}{D'(T_S, t_1)}\right)\bar{\xi} + r_3\right\}$$

$D$ : un paramètre du modèle

$t_2$ : durée de la seconde injection

$t_0$ : instant au dessous duquel il n'y a pas de masse de carburant injectée

$r_1$, $r_2$, $r_3$ : des paramètres additionnels du modèle, calculées uniquement en fonction de D'

Ainsi, les paramètres de ce modèle sont : $c_1$, $c_2$, $r_1$, $r_2$, $r_3$, $\zeta$, et $p_r$

### Calibration des paramètres

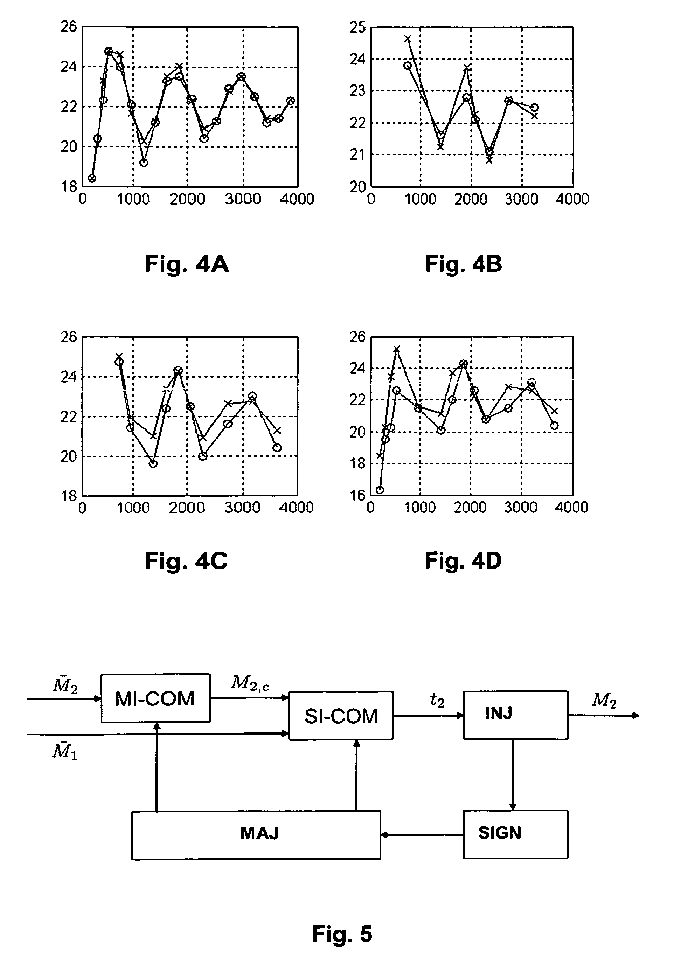

Les paramètres du modèle continu (*g* et *h* sont des fonctions continues), utilisés dans le compensateur, peuvent être calibrés à partir de mesures de la consommation du carburant pendant des essais moteurs avec injections multiples. Un exemple de calibration et de validation des modèles pour les injections multiples est montré sur les figures 4A à 4D. Ces figures représentent la masse corrigée (mg) en fonction du temps de séparation ($\mu$s), pour différentes conditions d'essai. La figure 4A est obtenue pour $t_1$ = 250 $\mu$s et $p_r$= 1600 bar; la figure 4B est obtenue pour $t_1$ = 200 $\mu$s et $p_r$= 1600 bar; la figure 4C est obtenue pour $t_1$ = 275 $\mu$s et $p_r$= 1400 bar; la figure 4D est obtenue pour $t_1$ = 250 $\mu$s et $p_r$= 1200 bar. Les différentes courbes dans chaque figure sont des sorties du modèle (croix) et des valeurs expérimentaux (cercles). Les paramètres du modèle ont été calibrés pour les premières données (figure 4A), puis employés pour les autres essais. Les paramètres du modèles calibrés sont $\omega$ = 0.0054 1/$\mu$s, $\zeta$ = 0.061, $\delta$ = 349 $\mu$s, $c_3$ = 0.1439, $c_4$ = 0.50 mg, $c_5$ = 0.25.

### 3. Détermination du temps d'injection $\underline{t_2}$ à partir de la masse de carburant corrigée

La valeur cherchée de $t_2$ est la durée d'injection telle que le système physique réalise la masse exigée $\bar{M}_2$.

On utilise le modèle paramétrique définit pour l'injection simple, c'est-à-dire l'équation (1) qui relie une masse injectée M à une durée d'injection *t*. On utilise dans la (1) la masse de carburant corrigée $M_{2,c}$ calculée dans l'étape précédente.

La correction pour des injections successives correspond ainsi uniquement à une adaptation du temps d'injection.

4. Injection du carburant via l'injecteur pendant le temps $t_2$.

On injecte du carburant pendant un temps $t_2$ via l'injecteur.

***Évaluation des paramètres et détection de l'injection***

Selon un mode de réalisation avantageux, on évalue en ligne les paramètres des modèles décrivant le procédé d'injection.

Les modèles permettant d'optimiser les injections, peuvent être calibrés à l'aide d'essais moteurs réalisé sur des bancs d'essais. A partir de ces essais, qui fournissent un grand nombre de mesures, on détermine les paramètres des modèles. Une fois implémentés dans un véhicule, ces paramètres sont donc fixes, quelque soit le fonctionnement du moteur.

Cependant, pendant le fonctionnement du véhicule, le comportement du système peut changer par rapport aux conditions dans lesquelles les paramètres du modèle ont été calibrés. Par exemple, la température du carburant dans la rampe joue un rôle important dans la détermination d'une partie des paramètres du modèle (temps de réponse de l'injecteur etc.).

Selon un mode de réalisation, on utilise alors des mesures réalisées en cours de fonctionnement du véhicule, pour mettre à jour les paramètres du modèle.

La figure 5 montre une structure d'adaptation qui utilise des mesures du système pour mettre à jour (MAJ) en ligne les paramètres du modèle, avec une fréquence relativement basse.

En particulier, le paramètre $t_0$ a une grande influence sur la précision du modèle. L'évaluation de $t_0$ peut, par exemple, dépendre de la pression de la rampe.

Enfin, un algorithme basé sur une méthode de signatures (SIGN) peut être utilisé pour détecter si les injections ont eu lieu ou pas. En particulier, la réalisation de la première injection (pilote) peut être détectée, ce qui permet d'adapter en ligne le paramètre $t_0$. En utilisant cette technique et en réalisant de fausses injections pilotes avec de très faibles temps d'injection, destinées à la détection du temps limite d'injection tel qu'il n'y ait pas d'injection de carburant, on peut estimer précisément $t_0$.

**Avantages**

Ainsi, la méthode peut fournir une compensation de l'influence mutuelle des injections successives sans besoin de cartographies complexes multidimensionnelles. En fait, le caractère multi-pulse est totalement pris en compte par le modèle.

L'utilisation de modèles physiques permet d'extrapoler dans des zones de fonctionnement où une caractérisation expérimentale du système hors ligne n'est pas possible, ou n'est pas pratique à obtenir. D'ailleurs, les temps de caractérisation sont réduits avec un modèle paramétrique.

La nature paramétrique du modèle permet d'isoler les effets des phénomènes principaux et leur influence sur le processus global. Tandis que les variables d'influence sont explicitement prises en compte dans le modèle, les effets permanents de la géométrie, de la fabrication, etc., du système sont réduits dans quelques paramètres à calibrer. Le nombre de ces paramètres est beaucoup plus petit que le nombre de données nécessaires pour renseigner des cartographies même bidimensionnelles.

La distinction entre les différents injecteurs des moteurs multicylindres est naturellement réalisée en différenciant les paramètres de chaque modèle pour chaque injecteur. Les compensations pour les injections qui succèdent à la deuxième (principale) sont également naturellement réalisées en cascadant les compensateurs correspondants.

L'utilisation de capteurs spéciaux n'est pas nécessaire. Par contre, l'implémentation du compensateur peut comporter un bouclage en ligne avec modification des paramètres d'influence.

**Revendications**

**1.** Méthode pour injecter une masse *m* de carburant via au moins un injecteur d'une rampe commune équipant un moteur à combustion interne, **caractérisée en ce qu'**elle comporte les étapes suivantes :

   a.- on définit un modèle physique continu *f* décrivant le procédé d'injection en terme de débit de masse à travers l'injecteur, permettant de déterminer une masse injectée *M* en fonction d'une pression $p_r$ dans ladite rampe

commune, d'un temps d'injection *t* et de paramètres à calibrer, ledit modèle *f* étant de la forme :

$$M \approx k(p_r)\left\{(t - t_0) + \frac{1}{D}\left[e^{-D(t-t_0)} - 1\right]\right\}$$

avec :

> *k* : une fonction de $p_r$ et de paramètres à calibrer ;
> $t_0$ : instant avant lequel aucune masse de carburant n'est injectée ;
> D : paramètres du modèle à calibrer ;

> b.- on mesure la pression $p_r$ dans ladite rampe commune;
> c.- on détermine le temps *t* d'injection de carburant nécessaire pour injecter la masse m de carburant, l'aide dudit modèle physique et de ladite pression $p_r$; et
> d.- on injecte du carburant via l'injecteur pendant le temps *t*.

**2.** Méthode selon la revendication 1, dans laquelle on adapte le temps *t* de l'injection de la masse *m*, de façon à compenser des effets d'une première injection. précédant ladite injection de la masse *m*, en remplaçant, à l'étape c), la masse *m* par une masse *mc* de carburant tenant compte des effets de ladite première injection, ladite masse *mc* étant déterminée de la façon suivante :

> - on définit un second modèle continu physique *g*, décrivant le procédé d'une injection suivant une première injection en terme de débit de mass à travers l'injecteur, dans lequel on définit une dépendance entre temps d'injection et masse injectée, en prenant en compte la pression dans ladite rampe commune, un temps séparant lesdites injections, et un temps d'injection de ladite première injection.
> - on détermine la masse *mc* à injecter, en combinant ledit modèle physique *f* et ledit second modèle physique *g*.

**3.** Méthode selon la revendication 2, dans laquelle ledit second modèle *g*, correspond audit modèle *f*, dans lequel la mesure de pression dans la rampe est remplacée par une estimation de la pression dans la rampe avant le début de ladite injection.

**4.** Méthode selon l'une des revendications précédentes, dans laquelle on calibre ledit modèle *f* à partir de mesures de consommation de carburant issues d'essais sur banc moteur avec injections simples.

**5.** Méthode selon l'une des revendication 2 à 4, dans laquelle on calibre ledit modèle *g* à partir de mesures de consommation de carburant issues d'essais sur banc moteur avec injections multiples.

**6.** Méthode selon l'une des revendications 4 ou 5, dans laquelle le banc moteur est un banc dédié au système d'injection isolé du reste du moteur.

**7.** Méthode selon l'une des revendications 2 à 6, dans laquelle on adapte en ligne lesdits modèles, à partir de mesures réalisées pendant un fonctionnement sur véhicule dudit moteur.

**8.** Méthode selon la revendication 7, dans laquelle on détecte ladite première injection à l'aide d'un algorithme basé sur une méthode de signatures.

**Claims**

**1.** A method of injecting a mass *m* of fuel via at least one injector of a common rail equipping an internal-combustion engine, **characterized in that** it comprises the following stages:

> a- defining a continuous physical model *f* describing the injection process in terms of mass flow of fuel through the injector, allowing to determine an Injected mass *M* as a function of a pressure $p_r$, In sold common rail, of an injection time *t* and of parameters to be calibrated, said model *f* having the form as follows:

$$M \approx k(p_r)\left\{(t - t_0) + \frac{1}{D}\left[e^{-D(t-t_0)} - 1\right]\right\}$$

with:

k : a function of $p_r$ and of parameters to be calibrated ;
$t_0$ : time before which no fuel mass is injected ;
D : parameters of the model to be calibrated ;

b- measuring pressure $p_r$ in said common rail ;
c- determining the fuel injection time $t$ required for injecting fuel mass $m$ using said physical model and said pressure $p_r$ ; and
d- injecting fuel via the injector for a time $t$.

2. A method as claimed in claim 1, wherein the injection time $t$ of mass m is adjusted so as to compensate for the effects of a first injection preceding said injection of mass $m$, by replacing in stage c) mass $m$ with a fuel mass mc taking account of the effects of said first injection, sold mass $mc$ being determined as follows:

- defining a second continuous physical model g describing the process of an injection following a first injection In terms of mass flow through the injector, wherein a dependency between injection time and injected mass is defined, by taking account of the pressure in sold common rail, of a time separating said injections and of an injection time for said first injection ;
- determining mass $mc$ to be injected by combining said physical model f and said second physical model $g$.

3. A method as claimed In claim 2, wherein said second model g corresponds to said model $f$ wherein the pressure measurement in the rail is replaced with a pressure estimation in the rail prior to starting said injection.

4. A method as claimed in any one of the previous claims, wherein said model $f$ is calibrated from fuel consumption measurements obtained from engine bench tests with simple injections.

5. A method as claimed in any one of claims 2 to 4, wherein said model $g$ is calibrated from fuel consumption measurements obtained from engine bench tests with multiple injections.

6. A method as claimed In any one of claims 4 or 5, wherein the engine bench Is a bench dedicated to the injection system isolated from the rest of the engine.

7. A method as claimed In any one of claims 2 to 6, wherein said models are adjusted online from measurements performed during operation of said engine mounted In a vehicle.

8. A method as claimed in claim 7, wherein said first injection is detected by means of an algorithm based on a signature method.

**Patentansprüche**

1. Verfahren zum Einspritzen einer Masse $m$ von Kraftstoff über mindestens eine Einspritzdüse eines Kraftstoffspeichers (common Rail), mit dem eine Verbrennungskraftmaschine ausgestattet ist, **dadurch gekennzeichnet, dass** es die folgenden Schritte umfasst:

a. Es wird ein stetiges physikalisches Modell $f$ definiert, welches das Einspritzverfahren in Bezug auf den Massendurchfluss durch die Einspritzdüse beschreibt und es ermöglicht, eine eingespritzte Masse $M$ in Abhängigkeit von einem Druck $p_r$ in dem Kraftstoffspeicher, von einer Einspritzzeit $t$ und von zu Kalibrierenden Parametern zu bestimmen, wobei das Modell f die folgende Form hat:

$$M \approx k(p_r)\left\{(t - t_0) + \frac{1}{D}\left[e^{-D(t-t_0)} - 1\right]\right\},$$

wobei:

$k$ : Funktion von $p_r$ und von zu kalibrierenden Parametern;
$t_0$ : Zeitpunkt, vor welchem keine Kraftstoffmasse eingespritzt wird;
D : zu kalibrierende Parameter des Modells;

b. es wird der Druck $p_r$ in dem Kraftstoffspeicher gelassen;
c. mit Hilfe des physikalischen Modells und des Druckes $p_r$ wird die Zeit $t$ der Einspritzung von Kraftstoff bestimmt, die erforderlich ist, um die Masse $m$ von Kraftstoff einzuspritzen:
d. es wird während der Zelt $t$ Kraftstoff über die Einspritzdüse eingespritzt.

2. Verfahren nach Anspruch 1, wobei die Zeit $t$ der Einspritzung der Masse m so angepasst wird, dass Auswirkungen einer ersten Einspritzung, die der Einspritzung der Masse $m$ vorausgeht, Kompensiert werden, Indem in Schritt c) die Masse $m$ durch eine Masse $mc$ von Kraftstoff ersetzt wird, welche die Auswirkungen der ersten Einspritzung berücksichtigt, wobei diese Masse $mc$ auf die folgende Art und Weise bestimmt wird:

- Es wird ein zweites stetiges physikalisches Modell $g$ definiert, welches das Verfahren einer Einspritzung gemäß einer ersten Einspritzung in Bezug auf den Massendurchfluss durch die Einspritzdüse beschreibt und in welchem eine Abhängigkeit zwischen Einspritzzeit und eingespritzter Masse unter Berücksichtigung des Druckes in dem Kraflstoffspeicher, einer zwischen den Einspritzungen liegenden Zeit und einer Einspritzzeit der ersten Einspritzung definiert wird,
- es wird die einzuspritzende Masse $mc$ bestimmt, indem das physikalische Modell $f$ und das zweite physikalische Modell $g$ kombiniert werden.

3. Verfahren nach Anspruch 2, wobei das zweite Modell $g$ dem Modell $f$ entspricht, in welchem die Messung des Druckes in dem Kraftstoffspeicher durch eine Schätzung des Druckes in dem Kraftstoffspeicher vor dem Beginn der Einspritzung ersetzt wird.

4. Verfahren nach einem der vorhergehenden Ansprüche, wobei das Modell $f$ ausgehend von Kraftstoffverbrauchsmessungen kalibriert wird, die bei Versuchen auf dem Motorenprüfstand mit einfachen Einspritzungen vorgenommen werden.

5. Verfahren nach einem der Ansprüche 2 bis 4, wobei das Modell $g$ ausgehend von Kraftstoffverbrauchsmessungen kalibriert wird, die bei Versuchen auf dem Motorenprüfstand mit mehrfachen Einspritzungen vorgenommen werden.

6. Verfahren nach einem der Ansprüche 4 oder 5, wobei der Motorenprüfstand ein Prüfstand ist, der für das vom restlichen Teil des Motors isolierte Einspritzsystem bestimmt ist.

7. Verfahren nach einem der Ansprüche 2 bis 6, wobei die Modelle ausgehend von Messungen, die während eines Betriebs des Motors im Fahrzeug vorgenommen werden, online angepasst werden,

8. Verfahren nach Anspruch 7, wobei die erste Einspritzung mit Hilfe eines Algorithmus detektiert wird, der auf einem Signaturverfahren beruht.

$$\bar{M}_2 \rightarrow \boxed{\text{MI-COM}} \xrightarrow{M_{2,c}} \boxed{\text{SI-COM}} \xrightarrow{t_2} \boxed{\text{INJ}} \xrightarrow{M_2}$$

**Fig. 1**

$p(t)$

$T_S > \delta$

$t$

$t_0$  $t_1$  $t_1 + T_S + t_0$

$t_1 + t_0 + \delta$  $t_1 + T_S + t_2$

**Fig. 2**

**Fig. 3**

Fig. 4A

Fig. 4B

Fig. 4C

Fig. 4D

Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1344923 A1
- US 5609140 A
- US 7000600 B1